# EUROPÄISCHE PATENTSCHRIFT

(11) **EP 2 745 008 B1**
(45) Veröffentlichungstag und Bekanntmachung des Hinweises auf die Patenterteilung: **21.12.2016**
(21) Anmeldenummer: 12778627.5
(22) Anmeldetag: 06.09.2012
(51) Int. Cl.: F03D 5/00, G01L 3/12

(54) **GETRIEBE FÜR INDUSTRIELLE ANWENDUNGEN ODER WINDKRAFTANLAGEN**
GEARBOX FOR INDUSTRIAL APPLICATIONS OR WIND POWER PLANTS
TRANSMISSION POUR DES APPLICATIONS INDUSTRIELLES OU DES ÉOLIENNES

(30) Priorität: 27.10.2011 DE 102011085299
(43) Veröffentlichungstag der Anmeldung: 25.06.2014
(73) Patentinhaber: Siemens Aktiengesellschaft, 80333 München (DE)
(72) Erfinder: DINTER, Ralf Martin, 45888 Gelsenkirchen (DE)
(86) Internationale Anmeldenummer: PCT/EP2012/067406
(87) Internationale Veröffentlichungsnummer: WO 2013/060518

(56) Entgegenhaltungen:
- WO-A2-2011/012497
- DE-A1- 19 962 596
- US-A- 4 741 217

## Beschreibung

Getriebe für industrielle Anwendungen oder Windkraftanlagen sind während ihrer Einsatzdauer einer dynamischen Lastfolge von Dreh- und Biegemomenten sowie axialen und radialen Kräften ausgesetzt. Zur Auslegung von Getrieben werden nutzerseitig definierte Lastkollektive verwendet. Davon abweichende reale Belastungen können Nutzungsdauerverkürzungen und Unterbrechungen von Verarbeitungs-, Fertigungs- oder Energieerzeugungsprozessen verursachen. Aus diesem Grund ist eine Erfassung tatsächlicher auftretender Belastungen in Getrieben insbesondere für Betriebsregelung und Maschinenauslegung wichtig.

Aus DE 103 21 210 A1 ist ein Verfahren zur Drehmomentmessung in einem Getriebe mit mehreren jeweils an einer Membran eines flexiblen Außenverzahnungsrads befestigten Dehnungsfühlern bekannt, bei dem jeweils eine Verstärkung von Ausgangssignalen der Dehnungsfühler erhöht wird, bevor die Ausgangssignale zur Bildung eines resultierenden Meßsignals kombiniert werden. Eine Anpassung der Verstärkung der Ausgangssignale der Dehnungsfühler ermöglicht eine Kompensation einer Drehwelligkeit, die in den Ausgangssignalen enthalten ist.

In GB 2 385 425 A ist ein Verfahren zur Drehmomentmessung in einem Getriebe beschrieben, bei dem an beidem Enden einer Getriebewelle jeweils ein berührungsloser Drehwinkelgeber angeordnet ist, der mit einer zugeordneten Detektoreinheit zusammenwirkt. Die Detektoreinheiten sind dabei jeweils an einer Gehäusewand bzw. -deckel montiert. Mittels der beiden Detektoreinheiten wird ein Phasendifferenzsignal abgeleitet, das ein Maß für eine belastungsabhängige Torsion der Getriebewelle ist. Aus einer bekannten Torsionssteifigkeit der Getriebewelle und der gemessenen Torsion wird ein auf die Getriebewelle einwirkendes Drehmoment ermittelt.

Aus DE 38 04 389 A1 ist eine Meßeinrichtung zum Erfassen eines in einem Getriebe auftretenden Überlastmomentes bekannt, bei der im Inneren einer Antriebswelle ist eine Meßeinrichtung angeordnet ist, die einen optischen Sender, einen Reflexionsspiegel sowie einen photoelektrischen Empfänger umfaßt. Bei Überlast erfolgt eine Durchbiegung der Antriebswelle, so daß ein orthogonal zur Wellenachse angeordneter Reflexionsspiegel einen vom optischen Sender emittierten Laserstrahl ablenkt. Der abgelenkte Reflexionsstrahl ruft am photoelektrischen Empfänger ein elektronisches Signal hervor, das einen Überlastschutz auslöst.

In gattungsgemäßen WO 2011/012497 A9 ist ein Getriebe beschrieben, dessen Antriebswelle bzw. Abtriebswelle in einem Bereich einer Gehäuseöffnung einen magnetisch oder optisch codierten Abschnitt aufweist. Dessen Codierung ist durch eine Einwirkung eines Drehmoments bzw. einer Kraft auf die Antriebswelle oder die Abtriebswelle änderbar. Mittels einer Abtasteinrichtung erfolgt eine berührungslose Erfassung der magnetischen oder optischen Codierung der Antriebswelle oder Abtriebswelle. Die Abtasteinrichtung ist in einem den magnetisch oder optisch codierten Abschnitt der Antriebswelle oder Abtriebswelle umgebenden Gehäusedeckel angeordnet und elektrisch mit einer Auswerteeinrichtung zur Erfassung eines Belastungskollektivs verbunden.

Der vorliegenden Erfindung liegt die Aufgabe zugrunde, ein Getriebe zu schaffen, das eine zuverlässige Erkennung von drohenden Getriebeüberlastungen ermöglicht.

Erfindungsgemäß wird diese Aufgabe durch ein Getriebe für industrielle Anwendungen oder Windkraftanlagen mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Getriebe umfaßt zumindest eine Antriebswelle und zumindest eine Abtriebswelle, die durch eine jeweilige Öffnung an einem Getriebegehäuse treten. Des weiteren sind zumindest ein mit der Antriebswelle verbundenes Zahnrad und zumindest ein mit der Abtriebswelle verbundenes Zahnrad vorgesehen, die mittelbar oder unmittelbar im Eingriff miteinander stehen. Darüber hinaus umfaßt das erfindungsgemäße Getriebe zumindest eine Abtasteinrichtung zur Erfassung eines auf die Antriebswelle, die Abtriebswelle oder eine durch die Antriebswelle antreibbare Welle einwirkenden Drehmoments. Die Abtasteinrichtung ist mit einer integrierten Energieerzeugungseinrichtung elektrisch verbunden. Der Energieerzeugungseinrichtung ist ein Rotor zugeordnet, der innerhalb des Getriebegehäuses angeordnet und drehfest mit einer durch die Antriebswelle antreibbaren Welle verbunden ist. Dieser Welle ist ein durch einen Gehäusedeckel fixiertes Lager zugeordnet. Außerdem umgibt der Gehäusedeckel den Rotor. Der Energieerzeugungseinrichtung ist des weiteren ein Stator zugeordnet, der innerhalb des Getriebegehäuses am Gehäusedeckel montiert ist. Dabei ist zwischen dem Rotor und dem Stator ein Luftspalt gebildet. Darüber hinaus ist die Abtasteinrichtung mit einer Auswerteeinrichtung zur Erfassung eines Belastungskollektivs verbunden. Aus einer Integration der Energieerzeugungseinrichtung für die Abtasteinrichtung in das erfindungsgemäße Getriebe ergibt sich aufgrund einer autarken Energieversorgung der Abtasteinrichtung eine erhöhte Zuverlässigkeit.

Die vorliegende Erfindung wird nachfolgend an einem Ausführungsbeispiel anhand der Zeichnung näher erläutert. Es zeigt
- Figur 1: eine schematische Darstellung eines ersten erfindungsgemäßen Getriebes,
- Figur 2: eine schematische Darstellung eines zweiten erfindungsgemäßen Getriebes,
- Figur 3: eine Querschnittsdarstellung einer ersten Variante einer in das Getriebe gemäß Figur 1 integrierte Energieerzeugungseinrichtung für eine Drehmomentabtasteinrichtung,
- Figur 4: eine Querschnittsdarstellung einer zweiten Variante einer integrierten Energieerzeugungseinrichtung,
- Figur 5: eine Querschnittsdarstellung einer dritten Variante einer integrierten Energieerzeugungseinrichtung,
- Figur 6: eine perspektivische Darstellung eines Wellenabschnitts mit einer magnetischen Codierung,
- Figur 7: eine perspektivische Darstellung einer Abtasteinrichtung mit einer Erregerspule und mehreren Meßspulen,
- Figur 8: eine perspektivische Darstellung eines Wellenabschnitts mit einer optischen Codierung,
- Figur 9: eine perspektivische Darstellung eines Wellenabschnitts mit mehreren in Form einer Wheatstoneschen Brücke verschalteten Dehnmeßstreifen.

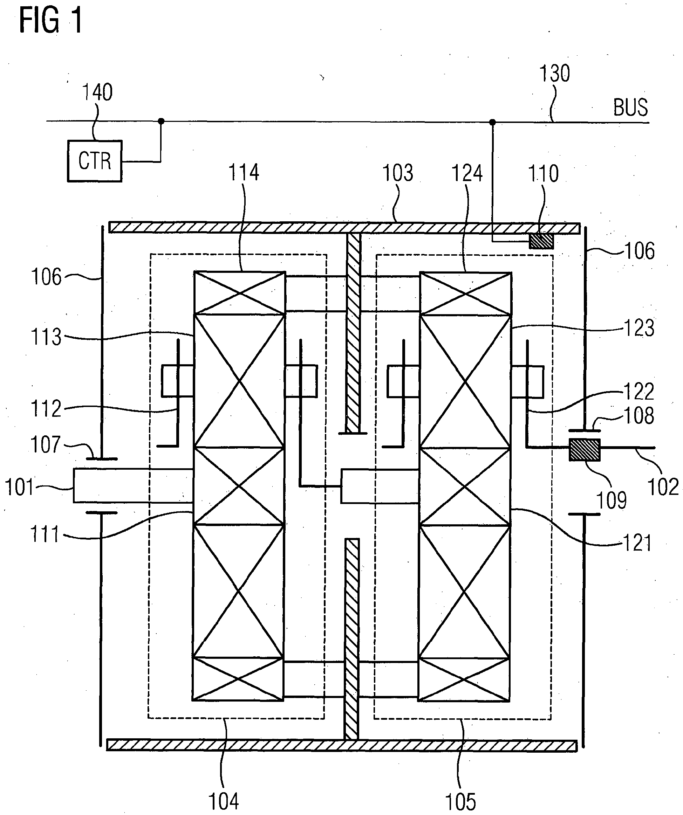

Das in Figur 1 beispielhaft dargestellte Getriebe umfaßt eine Antriebs- 101 und eine Abtriebswelle 102, die in einem Getriebegehäuse 103 gelagert sind. Die Antriebswelle 101 ist mit einem Sonnenrad 111 einer ersten Planetenstufe 104 verbunden, während die Abtriebswelle 102 mit einem mehrere Planetenräder 123 umfassen Planetenträger 122 einer zweiten Planetenstufe 105 verbunden ist. Die erste Planetenstufe 104 umfaßt außerdem einen Planetenträger 112, der mehrere mit einem feststehenden Hohlrad 114 kämmende Planetenräder 113 aufnimmt und mit einem Sonnenrad 121 der zweiten Planetenstufe 105 verbunden ist. Die zweite Planetenstufe 105 weist ebenfalls ein feststehendes Hohlrad 124 auf, das mit den Planetenrädern 123 der zweiten Planetenstufe 105 kämmt.

Das Getriebegehäuse 103 ist stirnseitig jeweils durch einen Gehäusedeckel 106 verschlossen. Die Gehäusedeckel 106 weisen Aufnahmen bzw. Führungselemente für Lager 107, 108 der Antriebs- 101 und Abtriebswelle 102 auf. Im Bereich des Lagers 108 der Abtriebswelle 102 ist im vorliegenden Ausführungsbeispiel ein Drehmomentsensor 109 vorgesehen, der mit einer Auswerteeinrichtung 110 elektrisch verbunden ist. Anstelle oder zusätzlich zu einem Drehmomentsensor können auch Sensoren zur Erfassung von Drehzahlen, Kräften, Biegemomenten oder Positionen vorgesehen sein. Entsprechend einer bevorzugten Ausführungsform werden Drehmoment- und zugeordnete Drehzahlmeßwerte als Lastkollektive durch die Auswerteeinrichtung 110 erfaßt. Zusätzlich könnte auch ein Drehmomentsensor im Bereich des Lagers 107 der Antriebswelle 101 vorgesehen sein. Der Drehmomentsensor 109 umfaßt einen magnetisch oder optisch codierten Abschnitt der Antriebs- oder Abtriebswelle sowie eine Abtasteinrichtung zur berührungslosen Erfassung der magnetischen oder optischen Codierung der Antriebs- oder Abtriebswelle.

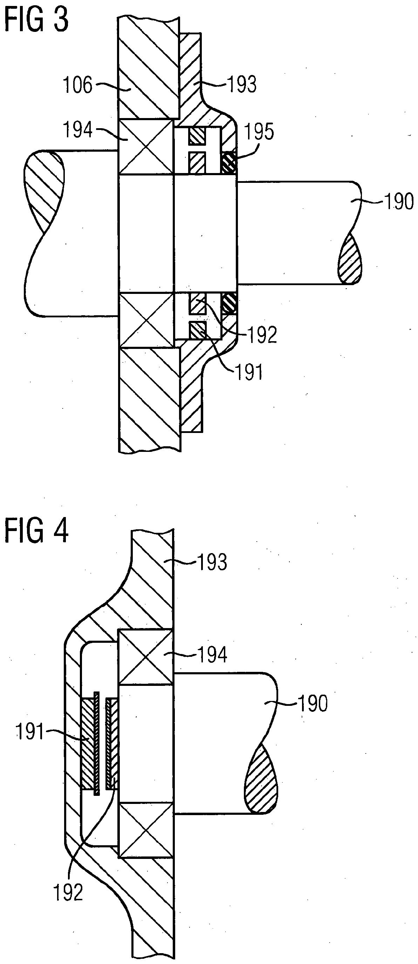

Der Drehmomentsensor 109 des in Figur 1 dargestellten Getriebes umfaßt eine integrierte Energieerzeugungseinrichtung. Entsprechend den Figuren 3 bis 5 ist der Energieerzeugungseinrichtung ein Rotor 192 zugeordnet, der innerhalb des Getriebegehäuses 103 angeordnet und drehfest mit einer durch die Antriebswelle 101 antreibbaren Welle 190 verbunden ist. Diese Welle kann beispielsweise die Abtriebswelle sein und ist an einem Ende mittels eines durch einen Gehäusedeckel 193 fixierten Lagers 194 gelagert. Dabei umgibt der Gehäusedeckel 193 den Rotor 192. Der Energieerzeugungseinrichtung ist des weiteren ein Stator 191 zugeordnet, der innerhalb des Getriebegehäuses 103 am Gehäusedeckel 193 montiert ist. Dabei ist zwischen dem Rotor 192 und dem Stator 191 ein Luftspalt gebildet.

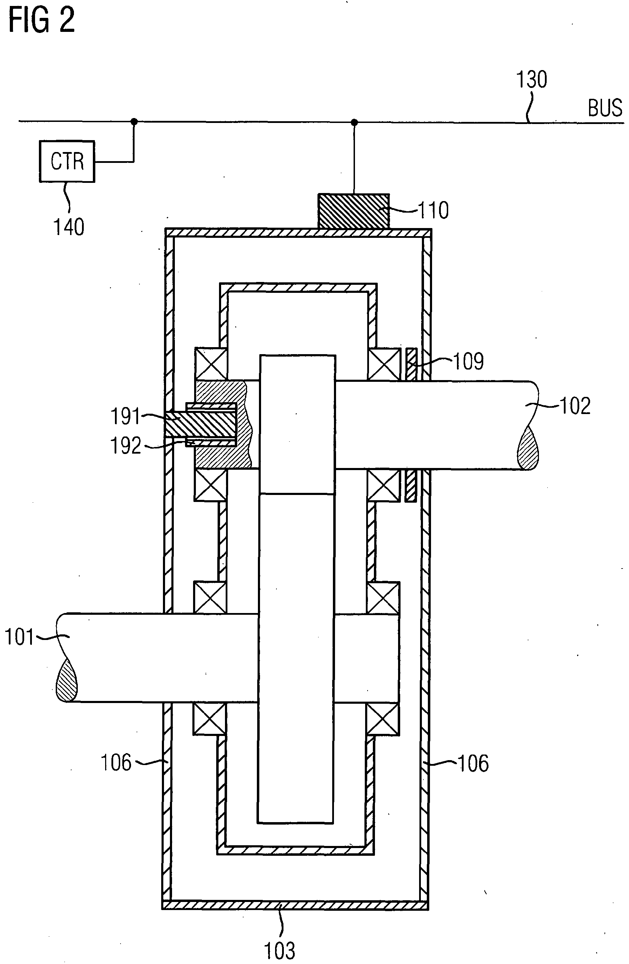

Bei dem in Figur 2 dargestellten Getriebe sind Stator 191 und Rotor 192 der Energieversorgungseinrichtung vom Drehmomentsensor 109 räumlich getrennt angeordnet. Dabei ist die Energieversorgungseinrichtung an einem antriebsseitigen Gehäusedeckel 106 befesttigt, während der Drehmomentsensor 109 sowie ein zusätzlicher Drehzahlsensor an einem abtriebsseitigen Gehäusedeckel 106 montiert sind.

Bei der in Figur 3 dargestellten ersten Variante der Energieerzeugungseinrichtung weist der Gehäusedeckel 193 eine Öffnung auf, durch welche die mit dem Rotor 192 drehfest verbundene Welle tritt. Dabei ist die Energieerzeugungseinrichtung als permanent erregter Innenläufer-Generator mit einem sich radial erstreckendem Luftspalt ausgestaltet, und der Rotor 192 ist auf die mit ihm drehfest verbundene Welle 190 aufgesteckt sowie axial zwischen dem Lager 194 und einem Wellendichtring 195 angeordnet.

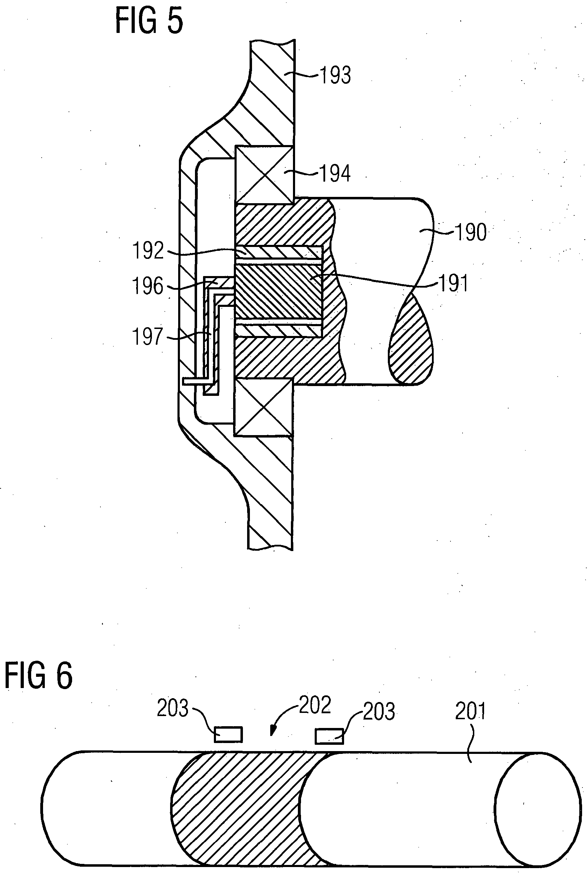

Entsprechend der in Figur 4 dargestellten zweiten Variante und der in Figur 5 dargestellten dritten Variante bildet der Gehäusedeckel 193 einen Lagersitz für das Lager 194. In beiden Fällen ist der Gehäusedeckel 193 im wesentlichen geschlossen und an einem Ende der mit dem Rotor 192 drehfest verbundenen Welle 190 angeordnet. Der Gehäusedeckel 193 weist ferner eine Durchführung für elektrische Versorgungsleitungen auf.

Bei der in Figur 4 dargestellten zweiten Variante ist die Energieerzeugungseinrichtung als permanent erregter Generator ausgestaltet, dessen Luftspalt sich axial zwischen Rotor 192 und Stator 191 erstreckt. Dagegen ist die Energieerzeugungseinrichtung bei der in Figur 5 dargestellten dritten Variante als permanent erregter Außenläufer-Generator ausgestaltet, dessen Luftspalt sich radial zwischen Rotor 192 und Stator 191 erstreckt. Grundsätzlich wäre auch eine Ausgestaltung als Innenläufer-Generator möglich. Die Energieerzeugungseinrichtung ist gemäß Figur 5 am gehäusedeckelseitigen Ende der mit dem Rotor 192 drehfest verbundenen Welle 190 in eine Bohrung an der Welle 190 eingesetzt. Darüber hinaus ist am Gehäusedeckel 193 eine als Arm ausgestaltete Drehmomentstütze 196 für den Stator 191 montiert. Dabei weist die Drehmomentstütze 196 eine Durchführung 197 für elektrische Leitungen auf.

Die Auswerteeinrichtung 110 umfaßt eine Speichereinheit zur Aufzeichnung eines Getriebebelastungsverlaufs. Den Getriebebelastungsverlauf repräsentierende Drehmoment- oder Kraftmeßwerte sowie zugeordnete Drehzahlmeßwerte werden in der Speichereinheit als Drehzahl-Drehmoment-Lastkollektive gespeichert. Die Drehzahl-Drehmoment-Lastkollektive geben dabei einen zeitlichen Anteil eines Meßwerts oder Meßwertebereichs während eines Getriebebetriebs wieder. Darüber hinaus weist die Auswerteeinrichtung 110 eine Bus-Schnittstelle auf und ist über ein Bus-System 130 entsprechend einer vorteilhaften Ausführungsform mit einer Regelungs- oder Steuerungseinrichtung 140 eines das Getriebe antreibenden Motors oder eines vom Getriebe angetriebenen Generators verbunden.

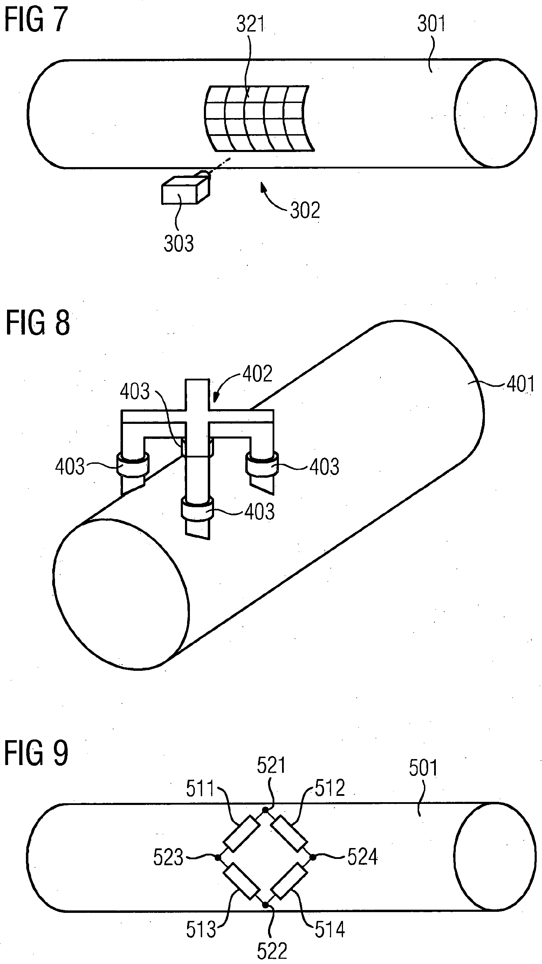

In Figur 6 und 7 ist dargestellt, daß die Antriebs- oder Abtriebswelle 201, 301 in einem Bereich, in dem sie die durch eine jeweilige Öffnung am Getriebegehäuse tritt, einen magnetisch oder optisch codierten Abschnitt 202, 302 aufweist. Dessen Codierung ist durch eine Einwirkung eines Drehmoments oder einer Kraft auf die Antriebs- oder Abtriebswelle 201, 301 änderbar.

Ein magnetisch codierter Abschnitt 202 weist ein vorgegebenes ein- oder mehrdimensionales Magnetisierungsprofil auf. Dabei ist ein aus dem vorgegebenen Magnetisierungsprofil resultierendes überlagertes Magnetfeld proportional zu einem auf die Antriebs- oder Abtriebswelle 201 einwirkenden Drehmoment. Korrespondierend zum magnetisch codierten Abschnitt 202 ist eine Abtasteinrichtung vorgesehen, die eine Mehrzahl von Magnetfeldsensoren umfaßt, beispielsweise elektrische Spulen 203.

Die Antriebs- oder Abtriebswelle kann des weiteren einen ferromagnetischen Abschnitt aufweisen, dessen Permeabilität der Codierung entspricht. Entsprechend der Darstellung in Figur 8 umfaßt die Abtasteinrichtung in diesem Fall eine zentral angeordnete Erregerspule 402 zur Erzeugung eines magnetischen Flusses durch den ferromagnetischen Abschnitt der Antriebs- oder Abtriebswelle 401 und eine Mehrzahl von Meßspulen 403 zur Erfassung eines durch die Permeabilität des ferromagnetischen Abschnitts beeinflußten magnetischen Flusses.

Figur 7 ist zu entnehmen, daß in einem optisch codierten Abschnitt 302 der Antriebs- oder Abtriebswelle 301 ein optischer Dehnungsmeßstreifen 321 mit einer Vielzahl von Reflexionsstellen angeordnet ist, deren Abstand durch eine Einwirkung eines Drehmoments oder einer Kraft auf die Antriebs- oder die Abtriebswelle 301 änderbar ist. In diesem Fall umfaßt die Abtasteinrichtung eine auf die Reflexionsstellen ausgerichtete Lichtquelle 302 mit integriertem Lichtsensor zur Wellenlängeermittlung von durch die Reflexionsstellen reflektiertem Licht.

Entsprechend der in Figur 9 dargestellten Ausführungsvariante sind auf der Antriebs- oder Abtriebswelle 501 in einem Bereich, in dem sie die durch eine jeweilige Öffnung am Getriebegehäuse tritt, mehrere in Form einer Wheatstoneschen Brücke miteinander verschaltete Dehnmeßstreifen 511-514 angeordnet. Eine drehmomentabhängige Torsion der Antriebs- oder Abtriebswelle 501 bewirkt eine Änderung eines resultierenden Widerstandes der Wheatstoneschen Brücke. Eine solche Widerstandsänderung ist ermittelbar, in dem zwischen einem ersten 521 und zweiten Anschluß 522 der Wheatstoneschen Brücke eine Eingangsspannung eingeprägt und zwischen einem dritten 523 und vierten Anschluß 524 der Wheatstoneschen Brücke eine Ausgangsspannung abgegriffen wird. Werden die Dehnmeßstreifen 511-514 durch Meßspulen ersetzt, und wird zusätzlich eine Erregerspule verwendet, kann auf Basis einer Wheatstoneschen Brücke auch ein induktiver Drehmomentsensor realisiert werden.

Eine Energieversorgung des Drehmomentsensors 109 erfolgt während des Getriebebetriebs vorzugsweise durch die vorangehend beschriebene Energieerzeugungseinrichtung. Zusätzlich ist vorzugsweise ein Stützakku zur Energieversorgung vorgesehen, wenn das Getriebe nicht oder nur mit geringer Drehzahl läuft. Darüber hinaus ist für den Drehmomentsensor 109 und die Auswerteeinrichtung 110 jeweils ein Standby-Modus vorgesehen, wenn das Getriebe über längere Zeit angetrieben wird. Sobald das Getriebe wieder angetrieben wird, erfolgt beispielsweise eine Erzeugung eines Triggersignals, mit dem der Drehmomentsensor 109 und die Auswerteeinrichtung 110 aus dem Standby-Modus reaktiviert werden.

Die Anwendung der vorliegenden Erfindung ist nicht auf die beschriebenen Ausführungsbeispiele beschränkt.

## Patentansprüche

1. Getriebe für industrielle Anwendungen oder Windkraftanlagen mit
- zumindest einer Antriebswelle (101) und zumindest einer Abtriebswelle (102), die durch eine jeweilige Öffnung an einem Getriebegehäuse (103) treten,
- zumindest einem mit der Antriebswelle (101) verbundenen Zahnrad (111) und zumindest einem mit der Abtriebswelle (102) verbundenen Zahnrad (123), die mittelbar oder unmittelbar im Eingriff miteinander stehen,
- zumindest einer Abtasteinrichtung (109) zur Erfassung eines auf die Antriebswelle (101), die Abtriebswelle (102) oder eine durch die Antriebswelle (101) antreibbare Welle (190) einwirkenden Drehmoments,
- einer mit der zumindest einen Abtasteinrichtung (109) elektrisch verbundenen Energieerzeugungseinrichtung,
- einer mit der zumindest einen Abtasteinrichtung (109) verbundenen Auswerteeinrichtung (110) zur Erfassung eines Belastungskollektivs,
gekennzeichnet dass das Getriebe mit einem der Energieerzeugungseinrichtung zugeordneten Rotor (192), der innerhalb des Getriebegehäuses (103) angeordnet und drehfest mit einer durch die Antriebswelle (101) antreibbaren Welle (102, 190) verbunden ist, der ein durch einen Gehäusedeckel (193) fixiertes Lager (194) zugeordnet ist, wobei der Gehäusedeckel (193) den Rotor (192) umgibt, und mit einem der Energieerzeugungseinrichtung zugeordneten Stator (191), der innerhalb des Getriebegehäuses (103) am Gehäusedeckel (193) montiert ist, wobei zwischen dem Rotor (192) und dem Stator (191) ein Luftspalt gebildet ist, vorgesehen ist.

2. Getriebe nach Anspruch 1,
bei dem der Gehäusedeckel (193) einen Lagersitz bildet, welcher der mit dem Rotor (192) drehfest verbundenen Welle (190) zugeordnet ist.

3. Getriebe nach einem der Ansprüche 1 oder 2,
bei dem der Gehäusedeckel (193) im wesentlichen geschlossen und an einem Ende der mit dem Rotor (192) drehfest verbundenen Welle (190) angeordnet ist.

4. Getriebe nach Anspruch 3,
bei dem sich der Luftspalt axial zwischen Rotor (192) und Stator (191) erstreckt.

5. Getriebe nach Anspruch 3,
bei dem sich der Luftspalt radial zwischen Rotor (192) und Stator (191) erstreckt.

6. Getriebe nach Anspruch 5,
bei dem die Energieerzeugungseinrichtung ein Innenläufer-Generator ist.

7. Getriebe nach Anspruch 5,
bei dem die Energieerzeugungseinrichtung ein Außenläufer-Generator ist, der am gehäusedeckelseitigen Ende der mit dem Rotor (192) drehfest verbundenen Welle (190) in eine Bohrung an dieser Welle (190) eingesetzt ist.

8. Getriebe nach Anspruch 7,
bei dem am Gehäusedeckel (193) eine als Arm ausgestaltete Drehmomentstütze (196) für den Stator (191) montiert ist, und bei dem die Drehmomentstütze (196) eine Durchführung (197) für elektrische Leitungen aufweist.

9. Getriebe nach einem der Ansprüche 1 oder 2,
bei dem der Gehäusedeckel (193) eine Öffnung aufweist, durch welche die mit dem Rotor (192) drehfest verbundene Welle tritt (190), und bei dem der Rotor (192) auf die mit ihm drehfest verbundene Welle (190) aufgesteckt ist.

10. Getriebe nach Anspruch 9,
bei dem sich der Luftspalt radial zwischen Rotor (192) und Stator (191) erstreckt, und bei dem die Energieerzeugungseinrichtung ein Innenläufer-Generator ist.

11. Getriebe nach einem der Ansprüche 1 bis 10,
bei dem die Auswerteeinrichtung (110) eine Speichereinheit zur Aufzeichnung eines Getriebebelastungsverlaufs aufweist.

12. Getriebe nach einem der Ansprüche 1 bis 11,
bei dem den Getriebebelastungsverlauf repräsentierende Drehmoment- und/oder Kraftmeßwerte in der Speichereinheit als Lastkollektive speicherbar sind, die einen zeitlichen Anteil eines Meßwerts oder Meßwertebereichs während eines Getriebebetriebs wiedergeben.

13. Getriebe nach einem der Ansprüche 1 bis 12,
bei dem die Auswerteeinrichtung (109) mit einer Regelungs- oder Steuerungseinrichtung (140) eines das Getriebe antreibenden Motors oder eines vom Getriebe angetriebenen Generators verbunden ist.

## Claims

1. Gearbox for industrial applications or wind power plants with
- at least one drive shaft (101) and at least one output shaft (102), which pass through a respective opening on a gearbox housing (103),
- at least one gearwheel (111) connected to the drive shaft (101) and at least one gearwheel (123) connected to the output shaft (102), these engaging indirectly or directly with one another,
- at least one sensing device (109) for detecting a torque acting on the drive shaft (101), the output shaft (102) or a shaft (190) that can be driven by the drive shaft (101),
- an energy-generating device connected electrically to the at least one sensing device (109),
- an evaluation device (110) connected to the at least one sensing device (109) for detecting a load spectrum,
**characterised in that** the gearbox is provided with a rotor (192) assigned to the energy-generating device, which is arranged within the gearbox housing (103) and connected in a rotationally fixed fashion to a shaft (102, 190) that can be driven by the drive shaft (101), which is assigned a bearing (194), which is secured by a housing cover (193), wherein the housing cover (193) encloses the rotor (192), and with a stator (191) assigned to the energy-generating device, which is mounted on the housing cover (193) within the gearbox housing (103), wherein an air gap is formed between the rotor (192) and the stator (191).

2. Gearbox according to claim 1,
wherein the housing cover (193) forms a bearing seat, to which the shaft (190) connected in a rotationally fixed fashion to the rotor (192) is assigned.

3. Gearbox according to one of claims 1 or 2,
wherein the housing cover (193) is essentially closed and is arranged at one end of the shaft (190) connected in a rotationally fixed fashion to the rotor (192).

4. Gearbox according to claim 3,
wherein the air gap extends axially between rotor (192) and stator (191).

5. Gearbox according to claim 3,
wherein the air gap extends radially between rotor (192) and stator (191).

6. Gearbox according to claim 5,
wherein the energy-generating device is an internal rotor generator.

7. Gearbox according to claim 5,
wherein the energy-generating device is an external rotor generator, which is inserted into a hole on the shaft (190) at the housing cover-side end of said shaft (190) connected in a rotationally fixed fashion to the rotor (192).

8. Gearbox according to claim 7,
wherein a torque bracket (196) for the stator (191), embodied as an arm, is mounted on the housing cover (193) and wherein the torque bracket (196) has a bushing (197) for electrical lines.

9. Gearbox according to one of claims 1 or 2,
wherein the housing cover (193) has an opening, through which the shaft (190), which is connected in a rotationally fixed fashion to the rotor (192), passes, and wherein the rotor (192) is positioned on the shaft (190) connected in a rotationally fixed fashion to it.

10. Gearbox according to claim 9,
wherein the air gap extends radially between rotor (192) and stator (191) and wherein the energy-generating device is an internal rotor generator.

11. Gearbox according to one of claims 1 to 10,
wherein the evaluation device (110) comprises a storage unit for recording a gearbox load profile.

12. Gearbox according to one of claims 1 to 11,
wherein torque measurement values and/or force measurement values representing the gearbox load profile can be stored as load spectra in the storage unit, indicating a temporal portion of a measurement value or measurement value range during gearbox operation.

13. Gearbox according to one of claims 1 to 12,
wherein the evaluation device (109) is connected to a regulation or control device (140) of a motor driving the gearbox or a generator driven by the gearbox.

## Revendications

1. Transmission pour des applications industrielles ou des éoliennes comprenant
- au moins un arbre ( 101 ) menant et au moins un arbre ( 102 ) mené, qui entrent par une ouverture respective dans un carter ( 103 ) de la transmission,
- au moins une roue ( 111 ) dentée reliée à l'arbre ( 101 ) menant, et au moins une roue ( 123 ) dentée reliée à l'arbre ( 102 ) mené, qui engrènent l'une avec l'autre, directement ou indirectement,
- au moins un dispositif ( 109 ) de détection pour détecter un couple de rotation agissant sur l'arbre ( 101 ) menant, sur l'arbre ( 102 ) mené ou sur un arbre ( 190 ) pouvant être entraîné par l'arbre ( 101 ) menant,
- un dispositif de production d'énergie relié électriquement au au moins un dispositif ( 109 ) de détection,
**caractérisée en ce que** la transmission est reliée à un rotor ( 192 ), qui est associé au dispositif de production d'énergie, qui est disposé à l'intérieur du carter ( 103 ) de la transmission et qui est solidaire en rotation d'un arbre ( 102, 190 ) pouvant être entraîné par l'arbre ( 101 ) menant, arbre ( 102 ) auquel est associé un palier ( 194 ) immobilisé par un couvercle ( 193 ) du carter, le couvercle ( 193 ) du carter entourant le rotor ( 192 ) et comprenant un stator ( 191 ) qui est associé au dispositif de production d'énergie et qui est monté à l'intérieur du carter ( 103 ) de la transmission sur le couvercle ( 193 ) du carter, un entrefer étant prévu entre le rotor ( 192 ) et le stator ( 191 ),
- un dispositif ( 110 ) d'exploitation relié au au moins un dispositif ( 109 ) de détection pour détecter un collectif de charge.

2. Transmission suivant la revendication 1,
dans laquelle le couvercle ( 193 ) du carter forme un siège de palier, auquel est associé l'arbre ( 190 ) solidaire en rotation du rotor ( 192 ).

3. Transmission suivant l'une des revendications 1 ou 2,
dans laquelle le couvercle ( 193 ) du carter est sensiblement fermé et est disposé à un bout de l'arbre ( 190 ) solidaire en rotation du rotor ( 192 ).

4. Transmission suivant la revendication 3,
dans laquelle l'entrefer s'étend axialement entre le rotor ( 192 ) et le stator ( 191 ).

5. Transmission suivant la revendication 3,
dans laquelle l'entrefer s'étend radialement entre le rotor ( 192 ) et le stator ( 191 ).

6. Transmission suivant la revendication 5,
dans laquelle le dispositif de production d'énergie est une génératrice à induit intérieur.

7. Transmission suivant la revendication 5,
dans laquelle le dispositif de production d'énergie est une génératrice à induit extérieur qui, à l'extrémité du couvercle du carter de l'arbre ( 190 ) solidaire en rotation du rotor ( 192 ), est insérée dans un alésage de cet arbre ( 190 ).

8. Transmission suivant la revendication 7,
dans laquelle une assistance ( 196 ) de couple de rotation, conformée en bras pour le stator ( 191 ), est montée sur le couvercle ( 193 ) du carter et dans laquelle l'assistance ( 196 ) de couple de rotation a une traversée ( 197 ) pour des lignes électriques.

9. Transmission suivant l'une des revendications 1 ou 2,
dans laquelle le couvercle ( 193 ) du carter a une ouverture dans laquelle entre l'arbre ( 190 ) solidaire en rotation du rotor ( 192 ) et dans laquelle le rotor ( 192 ) est emmanché sur l'arbre ( 190 ) dont il est solidaire en rotation.

10. Transmission suivant la revendication 9,
dans laquelle l'entrefer s'étend radialement entre le rotor ( 192 ) et le stator ( 191 ) et dans laquelle le dispositif de production d'énergie est une génératrice à induit intérieur.

11. Transmission suivant l'une des revendications 1 à 10,
dans laquelle le dispositif ( 110 ) d'exploitation a une unité de mémorisation pour enregistrer une courbe de charge de la transmission.

12. Transmission suivant l'une des revendications 1 à 11,
dans laquelle des valeurs de mesure de couple de rotation et/ou de force, représentant la courbe de charge de la transmission, peuvent être mémorisées dans l'unité de mémorisation sous la forme de collectifs de charge, qui reproduisent une proportion dans le temps d'une valeur de mesure ou d'une plage de valeur de mesure, pendant un fonctionnement de la transmission.

13. Transmission suivant l'une des revendications 1 à 12,
dans laquelle le dispositif ( 109 ) d'exploitation est relié à un dispositif ( 140 ) de régulation ou de commande d'un moteur entraînant la transmission ou d'une génératrice entraînée par la transmission.
